# EUROPÄISCHE PATENTSCHRIFT

(11) **EP 4 007 745 B1**
(45) Veröffentlichungstag und Bekanntmachung des Hinweises auf die Patenterteilung: **19.06.2024**
(21) Anmeldenummer: 20767797.2
(22) Anmeldetag: 04.09.2020
(51) Int. Cl.: C03C 17/36

(54) **ENTSCHICHTUNGSEINRICHTUNG UND -VERFAHREN ZUM ENTSCHICHTEN VON GLASSCHEIBEN, SOWIE VERFAHREN ZUR HERSTELLUNG VON GLASSCHEIBEN FÜR STUFENGLAS, STUFENGLAS UND STUFENGLASFENSTER UND VERWENDUNG DER GLASSCHEIBE FÜR EINE ISOLIERVERGLASUNG, INSBESONDERE FÜR EIN STUFENGLAS EINES STUFENGLASFENSTERS**
COATING-REMOVAL DEVICE AND METHOD FOR REMOVING COATINGS FROM GLASS PANES, AND METHOD FOR PRODUCING GLASS PANES FOR STEPPED-EDGE GLASS, STEPPED-EDGE GLASS AND STEPPED-EDGE GLASS WINDOW AND USE OF THE GLASS PANE FOR AN INSULATING GLAZING UNIT, IN PARTICULAR FOR STEPPED-EDGE GLASS OF A STEPPED-EDGE GLASS WINDOW
DISPOSITIF D'ÉLIMINATION DE REVÊTEMENT ET PROCÉDÉ D'ÉLIMINATION DE REVÊTEMENTS PRÉSENTS SUR DES VITRES, ET PROCÉDÉ DE FABRICATION DE VITRES POUR VERRE À BORD ÉTAGÉ, VERRE À BORD ÉTAGÉ ET FENÊTRE EN VERRE À BORD ÉTAGÉ ET UTILISATION LA VITRE POUR UNE UNITÉ DE VITRAGE ISOLANT, EN PARTICULIER POUR LE VERRE À BORD ÉTAGÉ D'UNE FENÊTRE EN VERRE À BORD ÉTAGÉ

(30) Priorität: 06.09.2019 DE 102019213603
(43) Veröffentlichungstag der Anmeldung: 08.06.2022
(73) Patentinhaber: HEGLA boraident GmbH & Co. KG, 37688 Beverungen (DE)
(72) Erfinder: RAINER, Thomas, 38855 Wernigerode (DE)
(74) Vertreter: Dr. Solf & Zapf Patent- und Rechtsanwalts PartG mbB
(86) Internationale Anmeldenummer: PCT/EP2020/074827
(87) Internationale Veröffentlichungsnummer: WO 2021/044015

(56) Entgegenhaltungen:
- EP-A1- 0 517 176
- EP-A1- 1 864 950
- EP-A1- 3 034 295
- DE-U1-202014 010 748

## Beschreibung

Die vorliegende Erfindung betrifft eine Entschichtungseinrichtung und ein Entschichtungsverfahren zum Randentschichten von Glasscheiben sowie ein Verfahren zur Herstellung von Glasscheiben für Stufenglas.

Als Flachglas wird jedes Glas in Form von Glasscheiben bezeichnet, unabhängig vom angewandten Herstellungsverfahren.

Bei Verbundglasscheiben handelt es sich um ein Laminat aus mindestens zwei einzelnen Glasscheiben, die jeweils mittels einer klebfähigen Zwischenschicht aus Kunststoff, insbesondere durch eine hochreißfeste, zähelastische, thermoplastische Folie, miteinander verbunden sind. Flachglasscheiben können somit aus einer einzigen Glasscheibe (Einzelglasscheiben) bestehen oder aus mehreren miteinander verklebten Glasscheiben (Verbundglasscheiben).

Um Flachglasscheiben mit Filter-, Spiegel-, Heizfunktionen oder sonstigen Funktionen zu versehen, werden die unterschiedlichsten, ein- oder mehrlagigen Funktionsbeschichtungen auf die einzelnen Flachglasscheiben aufgebracht. Die Funktionen können dabei z.B. Wärmeschutz, Sonnenschutz oder Beheizung sein. Bei den einzelnen Funktionsschichten handelt es sich in der Regel um metallische Schichten. Beispielsweise handelt es sich um Niedrigemissionsschichten oder elektrische Heizschichten. Zwischen den einzelnen metallischen Funktionsschichten einer Funktionsbeschichtung können eine oder mehrere dielektrische (Funktions-)schichten, z.B. aus einem Oxid, wie Aluminiumoxid, angeordnet sein.

Die Aufbringung der einzelnen Funktionsschichten erfolgt vorzugsweise auf Flachglasrohscheiben maximaler handelsüblicher Größe (6.100 mm x 3.250 mm). Aus diesen großflächig beschichteten Flachglasrohscheiben werden anschließend nach Bedarf Einzelscheiben geschnitten, die dann zu Funktionseinheiten weiterverarbeitet werden. Diese Funktionseinheiten können z. B. Isolierglaseinheiten bzw. Isolierverglasungen sein, wobei die Scheibenränder der Einzelscheiben mit z. B. Abstandhaltereinrichtungen verklebt werden. Für diesen Randverbund werden Randverbundkleber verwendet, wobei die Randverbundkleber ausschließlich für den direkten Verbund mit Glasoberflächen und nicht mit den Funktionsschichten ausgelegt sind. Die Flachglasscheiben müssen deshalb im Bereich der Verklebung entschichtet werden, wobei die Entschichtungsbreite z. B. etwa 10 mm beträgt. Ohne Entschichtung ist eine zuverlässige Haftung des Randverbundklebers nicht gewährleistet. Diesen Vorgang bezeichnet man als Randentschichtung.

Die Randentschichtung erfolgt dabei entlang der Glasscheibenkanten und/oder entlang von späteren Schneid- bzw. Ritz- bzw. Trennlinien, entlang derer die Flachglasrohscheiben nach dem Entschichten in einzelne Glasscheiben zerteilt werden.

In der Regel ist die funktionelle Beschichtung eine einzelne Funktionsschicht oder ein Schichtaufbau mit mehreren Funktionsschichten mit einer Gesamtdicke < 2 µm, vorzugsweise < 1 µm. Der Schichtaufbau wird in der Regel durch Abscheidevorgänge erhalten.

Bei bereits auf Endmaß geschnittenen Glasscheiben erfolgt das Randentschichten beispielsweise entlang der Glasscheibenkanten in einfacher Entschichtungsbreite.

Bei den Glasrohscheiben bzw. Rohglasscheiben wird in doppelter Entschichtungsbreite beidseitig neben der späteren Schneid- bzw. Ritz-. bzw. Trennlinie entschichtet. Auch hier kann aber - bei entsprechendem Maß der Glasscheibe und Qualität der Glasscheibenkanten - entlang der Glasscheibenkanten in einfacher Entschichtungsbreite entschichtet werden. Im Bereich der späteren Schneid- bzw. Ritz- bzw. Trennlinien sind die erzeugten Entschichtungsspuren somit doppelt so breit wie im Bereich der Glasscheibenkanten. Bei der Entschichtung der Kanten ist allerdings von Nachteil, dass durch das Überfahren der scharfen Kanten mit Entschichtungswerkzeugen letztere stark und unsymmetrisch abgenutzt werden können.

Das Abtragen der Funktionsschichten erfolgt auf dem Fachgebiet beispielsweise mittels mechanischer Abtragung durch Schleifwerkzeuge oder durch Sandstrahlen.

Es kann aber auch mit Gasbrennern erfolgen.

Aus der DE 41 18 241 C2 und der EP 0 517 176 A1 ist es beispielsweise bekannt, Schleifvorrichtungen für die Entschichtung zu verwenden.

Aus der DE 34 03 682 sind ein Verfahren und eine Vorrichtung bekannt, bei denen Entschichtungs- und Schneidvorgang zusammengefasst sind, wobei die Entschichtung mit Gasbrennern erfolgt.

Das deutsche Gebrauchsmuster DE 20 2013 104 834 U1 betrifft einen Tisch zum Bearbeiten nichtmetallischer, transparenter Materialien durch Laserstrahlung, insbesondere zum Entfernen von metallischen Beschichtungen, beispielsweise von Niedrigemissionsbeschichtungen, und anderer Beschichtungen, von Glas.

Auch die EP 1 864 950 A1, die WO 2016/096435 A1 und die DE 10 2007 015 767 A1 offenbaren jeweils das Entschichten von Glassubstraten (Flachglas, Solarzelle) unter Verwendung eines Lasers. Bei dem zu abzutragenden Material handelt es sich jeweils um die Funktionsschicht.

Die EP 3 034 295 A1 und die DE 20 2014 010 748 U1 offenbaren jeweils die Herstellung einer Verbundglasscheibe mit im Randbereich beschichtungsfreien Einzelscheiben. Die beschichtungsfreien Bereiche können durch mechanisches Abtragen oder Laserabtragung hergestellt werden.

Des Weiteren gibt es seit einiger Zeit Glasarten, bei denen die Funktionsbeschichtung oder auch nur die unbeschichtete Glasoberfläche (bei Glasscheiben ohne Funktionsbeschichtung) durch eine abziehbare Schutzfolie (TPF= temporary protective film) oder eine Polymerschutzschicht (z. B. EasyPro^{®} von St. Gobain) geschützt ist, um diese vor eventuellen mechanischen Beschädigungen zu bewahren. Die Polymerschutzschicht ist z.B. durch Aufspritzen aufgebracht und nicht abziehbar, sondern mit der jeweiligen Oberfläche fest verbunden. Sie verbrennt allerdings während des Temperns im Ofen problemlos und rückstandsfrei.

Für die weitere Verarbeitung der Glasscheiben, z.B. die Isolierglasfertigung, müssen selbstverständlich analog zu den Funktionsschichten auch die Schutzfolie bzw. die Polymerschutzschicht zumindest an den späteren Randbereichen entfernt werden. Das Abtragen der Schutzfolie bzw. der Polymerschutzschicht erfolgt momentan mechanisch mittels eines Schleifwerkzeuges, insbesondere mittels eines Schleifrädchens bzw. einer Schleifscheibe. Weist die Glasscheibe dabei eine Funktionsbeschichtung auf, werden die Schutzfolie bzw. die Polymerschutzschicht und die Funktionsbeschichtung in einem Arbeitsgang abgeschliffen.

Aus der nicht vorveröffentlichten deutschen Patentanmeldung DE 10 2018 107 697.5 geht zudem ein Entschichtungsverfahren hervor, bei dem die Schutzfolie zum Randentschichten bereichsweise in Form zumindest eines Folienstreifens mechanisch abgetragen, insbesondere abgeschliffen, wird. Zudem werden vor dem mechanischen Abtragen des Folienstreifens derart Laserspuren in die Schutzfolie eingebracht, dass der Folienstreifen in Form von einzelnen, durch die Laserspuren voneinander getrennten Folienstreifenteilstücken abgetragen wird. Vorzugsweise wird eine unter der Schutzbeschichtung angeordnete Funktionsbeschichtung beim mechanischen Abtragen, insbesondere Abschleifen, der Folienstreifenteilstücke gleichzeitig mitabgetragen.

Gemäß einem weiteren, in der DE 10 2018 107 697.5 offenbarten Entschichtungsverfahren von Glasscheiben, die zumindest an einer ihrer beiden Glasoberflächen eine Schutzbeschichtung in Form einer nicht abziehbaren Polymerschutzschicht und vorzugsweise eine darunter angeordnete Funktionsbeschichtung aufweisen, wird die Polymerschutzschicht mittels Laserstrahlung abgetragen. Die Funktionsbeschichtung wird dann nach dem Abtragen der Polymerschutzschicht mittels Laserstrahlung oder mechanisch abgetragen, insbesondere abgeschliffen.

Wie bereits erläutert, ist die Randentschichtung notwendig, um zur Bildung einer Isolierverglasung die einzelnen Glasscheiben der Isolierverglasung am Rand mit einem Abstandhalter verkleben zu können.

Eine spezielle Form einer Isolierverglasung ist ein Stufenglas zur Herstellung eines Stufenglasfensters.

Stufenglasfenster werden auch "rahmenlose Fenster" genannt, obwohl sie einen Fensterrahmen aufweisen. Dieser ist allerdings deutlich kleiner als bei herkömmlichen Fensterkonstruktionen. Ein Stufenglas besteht aus einer Isolierverglasung, bei der die äußere Glasscheibe die andere(n) Glasscheibe(n) überragt, so dass eine Stufe gebildet wird. Der überragende Teil der äußeren Glasscheibe überdeckt dabei den Flügelrahmen. Damit der Flügelrahme nicht sichtbar ist, weist die äußere Glasscheibe an ihrer inneren Glasscheibenoberfläche eine farbige Beschichtung auf. Das Stufenglasfenster wirkt dadurch rahmenlos.

Damit die farbige Beschichtung aufgebracht werden kann, ist es notwendig, dass die Glasscheibenoberfläche in diesem Bereich keine Funktionsbeschichtung aufweist. Denn die Funktionsbeschichtung stört optisch.

Infolgedessen werden für Stufengläser in der Regel Glasscheiben verwendet, die mittels Festmaß-Beschichtung beschichtet sind. Bei der Festmaß-Beschichtung wird die Glasscheibenoberfläche maskiert mit der Funktionsbeschichtung beschichtet. Die Maskierung erfolgt in der Regel mit einem Klebeband. Das Klebeband deckt dabei den später mit Farbe zu bedruckenden Bereich der Glasscheibenoberfläche ab, so dass dieser nicht mit der Funktionsbeschichtung beschichtet wird. Bei den zu beschichtenden Glasscheiben handelt es sich zudem um bereits auf Endmaß geschnittene, kantenbearbeitete Glasscheiben.

Dieses Beschichtungsverfahren ist sehr zweitaufwendig und teuer, da zur Maskierung das Klebeband verwendet wird. Zum einen ist bereits das Klebeband sehr teuer, da es rückstandslos entfernbar sein muss sowie wärmebeständig sein muss und deshalb nur ein spezielles Klebeband verwendet werden kann. Zudem wird das Klebeband in der Regel per Hand aufgeklebt.

Außerdem werden bei der Festmaß-Beschichtung die Glasscheiben zur Kostenersparnis in der Regel chargenweise beschichtet. Das heißt, es werden Glasscheiben mit den gleichen Abmessungen zu Chargen zusammengefasst. Dadurch ist die Lieferzeit in der Regel relativ lang.

Stufengläser können z.B. für Structural Glazing (SG)-Fassaden verwendet werden. Dies sind Glasfassaden, bei der die Glaselemente durch Verklebungen im Tragsystem gehalten werden und eine aussteifende Wirkung haben können.

Aufgabe der vorliegenden Erfindung ist die Bereitstellung eines Randentschichtungsverfahrens zum Abtragen der Funktionsbeschichtung und, falls vorhanden, einer die Funktionsbeschichtung abdeckenden Schutzschicht, von Glasscheiben, z.B. von Verbundglasscheiben, wobei das Entschichten einfach, schnell, sicher und kostengünstig erfolgen soll und die entschichtete Glasoberfläche eine hohe Oberflächenqualität aufweisen soll. Die Glasscheiben dienen vorzugsweise zur Herstellung eines Stufenglases.

Weitere Aufgabe der Erfindung ist die Bereitstellung einer Entschichtungseinrichtung zur Durchführung des Entschichtungsverfahrens.

Zudem soll ein Verfahren zur Herstellung von Glasscheiben für Stufenglas bereitgestellt werden.

Diese Aufgaben werden durch ein Entschichtungsverfahren gemäß Anspruch 1, eine Entschichtungseinrichtung gemäß Anspruch 12 und ein Verfahren zur Herstellung von Glasscheiben für Stufenglas gemäß Anspruch 15 gelöst. Vorteilhafte Weiterbildungen der Erfindung werden in den sich anschließenden Unteransprüchen gekennzeichnet.

Im Folgenden wird die Erfindung anhand einer Zeichnung beispielhaft näher erläutert. Es zeigen:
- Figur 1:: Stark vereinfacht und schematisch einen Querschnitt durch einen Teil eines Stufenglasfensters
- Figur 2:: Stark vereinfacht und schematisch eine Draufsicht auf eine teilweise randentschichtete Glasscheibe
- Figur 3:: Stark vereinfacht und schematisch einen Schnitt durch eine Glasscheibe mit einer darüber angeordneten erfindungsgemäßen Entschichtungseinrichtung
- Figur 4:: Stark vereinfacht und schematisch eine Draufsicht auf eine Schneidund Entschichtungsstation mit einer erfindungsgemäßen Entschichtungseinrichtung mit einer randentschichteten Glasscheibe mit Entschichtungsspuren

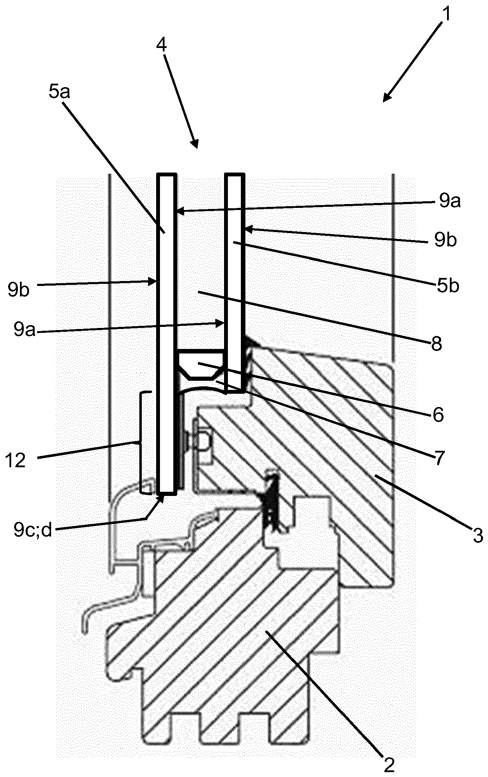

Ein Stufenglasfenster 1 (Fig. 1) weist in an sich bekannter Weise einen Blendrahmen 2, einen Flügelrahmen 3 und ein in den Flügelrahmen 3 eingeklebtes Stufenglas 4 auf. Das Stufenglas 4 ist als Isolierverglasung ausgebildet und weist somit zumindest zwei voneinander beabstandete Glasscheiben 5a;b, einen dazwischen angeordneten Abstandhalterrahmen 6, eine Primärdichtung (nicht dargestellt) sowie eine Randabdichtung (Sekundärdichtung) 7 auf. Die Primärdichtung ist in an sich bekannter Weise zwischen dem Abstandhalterrahmen 6 und der jeweiligen Glasscheibe 5a;b vorhanden und verklebt diese miteinander.

Zwischen den beiden Glasscheiben 5a;b ist ein Scheibenzwischenraum bzw. Scheibeninnenraum bzw. Spalt 8 vorhanden. Um diesen vordefinierten Scheibeninnenraum 8 dauerhaft zu gewährleisten, ist zwischen den beiden Glasscheiben 5a;b der umlaufende Abstandhalterrahmen 6 vorgesehen. Der Abstandhalterrahmen 6 verbindet die beiden Glasscheiben 5a;b im Scheibenrandbereich miteinander.

Bei den beiden Glasscheiben 5a;b kann es sich jeweils um eine Einzelglasscheibe oder eine Verbundglasscheibe aus zumindest zwei Einzelglasscheiben handeln.

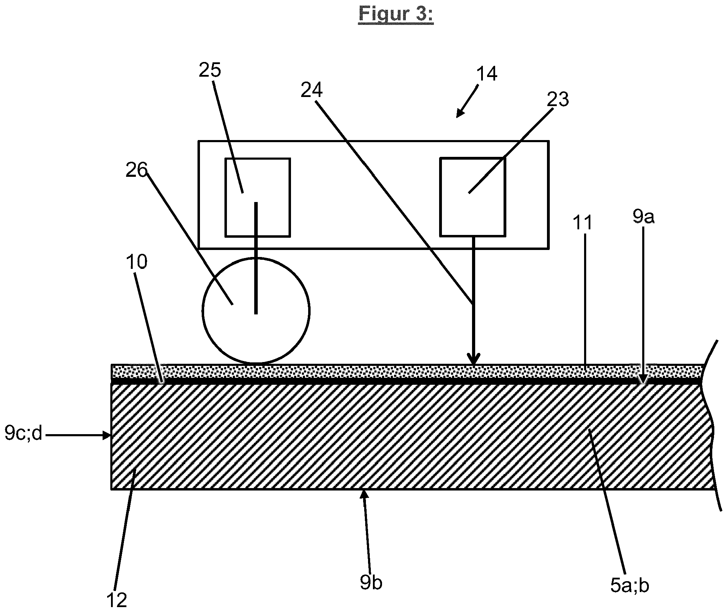

Die Glasscheiben 5a;b (Fig. 1-4) weisen zudem jeweils eine erste und zweite Glasscheibenoberfläche 9a;b sowie eine umlaufende Glasscheibenumlaufkante 9c auf. Die Glasscheibenumlaufkante 9c weist sich paarweise aneinander anschließende Glasscheibenkanten 9d auf. Handelt es sich um eine quaderförmige Glasscheibe 5, weist diese vier sich paarweise aneinander anschließende Glasscheibenkanten 9d auf.

Zudem weist zumindest die äußere Glasscheibe 5a zumindest an ihrer inneren Glasscheibenoberfläche 9a eine oberflächliche Funktionsbeschichtung 10 auf. Die Funktionsbeschichtung 10 kann eine oder mehrere einzelne Funktionsschichten aufweisen. Bei mehreren Funktionsschichten handelt es sich somit um ein Funktionsschichtenlaminat. Die Funktionsschichten ändern bestimmte Eigenschaften der Glasscheibe 5a;b bzw. verleihen dieser bestimmte Funktionen. Die Funktionen können dabei z.B. Wärmeschutz, Sonnenschutz, oder Beheizung sein. Bei den einzelnen Funktionsschichten handelt es sich vorzugsweise um metallische Schichten, z.B. um Niedrigemissionsschichten.

Die Funktionsbeschichtung 10 weist vorzugsweise eine Dicke von < 2 µm, bevorzugt < 1 µm, auf.

Des Weiteren können die Glasscheiben 5a;b, bevor sie eingebaut werden, an zumindest einer ihrer beiden Glasscheibenoberflächen 9a;b eine Schutzbeschichtung 11, bevorzugt in Form einer abziehbaren Schutzfolie oder einer Polymerschutzschicht, aufweisen. Die Schutzbeschichtung 11 deckt die jeweilige Glasscheibenoberfläche 9a;b nach außen hin ab und schützt die darunter angeordnete Funktionsbeschichtung 10 vor mechanischer Beschädigung. Die Schutzbeschichtung 11 bildet somit die äußere bzw. außenliegende Schicht der Glasscheibe 5a;b.

Im Gegensatz zur Funktionsbeschichtung 10 wird die Schutzbeschichtung 11 vor der endgültigen Verwendung der Glasscheibe 5a;b vollständig entfernt. Sie ist somit nicht dauerhaft vorhanden. Die Schutzfolie wird abgezogen und die Polymerschutzschicht wird verbrannt. Eine Funktionsbeschichtung 10 dagegen ist zumindest bereichsweise dauerhaft vorhanden.

Die Schutzfolie besteht vorzugsweise aus Kunststoff, vorzugsweise Polyvinylchlorid (PVC), und ist von der Glasscheibenoberfläche 9a;b abziehbar. Zudem weist die Schutzfolie vorzugsweise eine Dicke von 20 bis 100 µm auf.

Die Polymerschutzschicht besteht aus einem Polymer und ist nicht von der Glasscheibenoberfläche 9a;b abziehbar. Die Polymerschutzschicht ist mit der Funktionsbeschichtung 10 fest verbunden. Zudem weist die Polymerschutzschicht vorzugsweise eine Dicke von ≤ 1 mm auf.

Da es sich bei der Isolierverglasung um ein Stufenglas 4 (Fig. 1) handelt, steht zudem die äußere Glasscheibe 5a zumindest im Bereich einer ihrer Glasscheibenkanten 9d, bevorzugt im Bereich aller Glasscheibenkanten 9d, über die innere Glasscheibe 5b über. Dadurch wird eine Stufe zwischen den beiden Glasscheiben 5a;b gebildet. Die äußere Glasscheibe 5a weist also zumindest einen über die innere Glasscheibe 5b überstehenden Glasscheibenbereich 12 auf. Der Überstand der äußeren Glasscheibe 5a über die innere Glasscheibe 5b bzw. die Länge des überstehenden Glasscheibenbereichs 12 beträgt vorzugsweise jeweils 10. bis 500 mm, bevorzugt 100 bis 300 mm.

Der überstehende Glasscheibenbereich 12 überdeckt dabei den Flügelrahmen 3 bzw. deckt diesen ab. Damit der Flügelrahmen 3 nicht sichtbar ist, weist der überstehende Glasscheibenbereich 12 an der inneren Glasscheibenoberfläche 9a eine farbige Beschichtung auf. Das Stufenglasfenster 1 wirkt dadurch rahmenlos.

Damit die farbige Beschichtung auf den überstehende Glasscheibenbereich 12 aufgebracht werden kann, ist es dabei notwendig, die innere Glasscheibenoberfläche 9a im Bereich des überstehenden Glasscheibenbereichs 12 zu entschichten. Das heißt, die innere Glasscheibenoberfläche 9a muss nicht nur in dem Bereich, in dem sie mit dem Abstandhalterrahmen 6 verklebt wird, sondern auch im Bereich des überstehenden Glasscheibenbereichs 12 entschichtet werden. Beim Entschichten muss die Funktionsbeschichtung 10 und gegebenenfalls die Schutzbeschichtung 11 entfernt werden.

Im Rahmen der Erfindung wurde dabei festgestellt, dass eine rein mechanische Entschichtung, z.B. mittels Abschleifen, keine qualitativ ausreichend gute entschichtete Glasscheibenoberfläche 9a;b liefert. Vielmehr bleiben streifenförmige bzw. linienförmige Rückstände der Funktionsbeschichtung 10 zurück. Die entschichtete Glasscheibenoberfläche 9a;b weist dadurch eine Riefenstruktur auf. Sie wirkt milchig.

Würde die mechanische Entschichtung mit mehr Anpressdruck ausgeführt werden, würde zwar die Funktionsbeschichtung 10 rückstandlos entfernt werden. Allerdings würde dabei auch die empfindliche Glasscheibenoberfläche 9a;b verletzt werden, was ebenfalls zu keiner ausreichend glatten Oberfläche führen würde.

Erfindungsgemäß ist deshalb vorgesehen, die Funktionsbeschichtung 10 und, falls vorhanden die Schutzbeschichtung 11, zunächst mechanisch abzutragen, vorzugsweise abzuschleifen, und anschließend verbliebene Beschichtungsrückstände 13 mittels Laser abzutragen. Die so erzeugte, qualitativ hochwertige Glasscheibenoberfläche 9a;b kann dann farbig beschichtet werden.

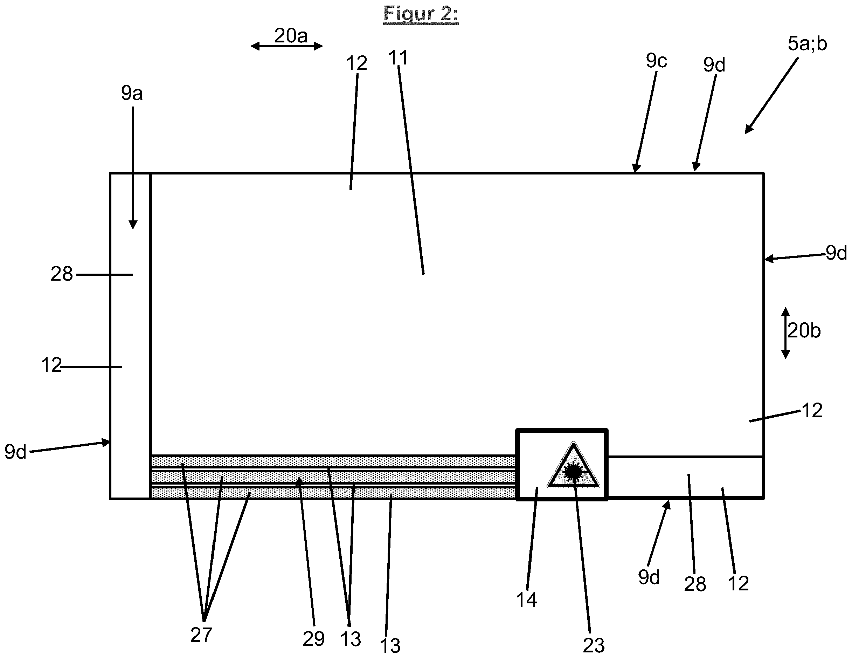

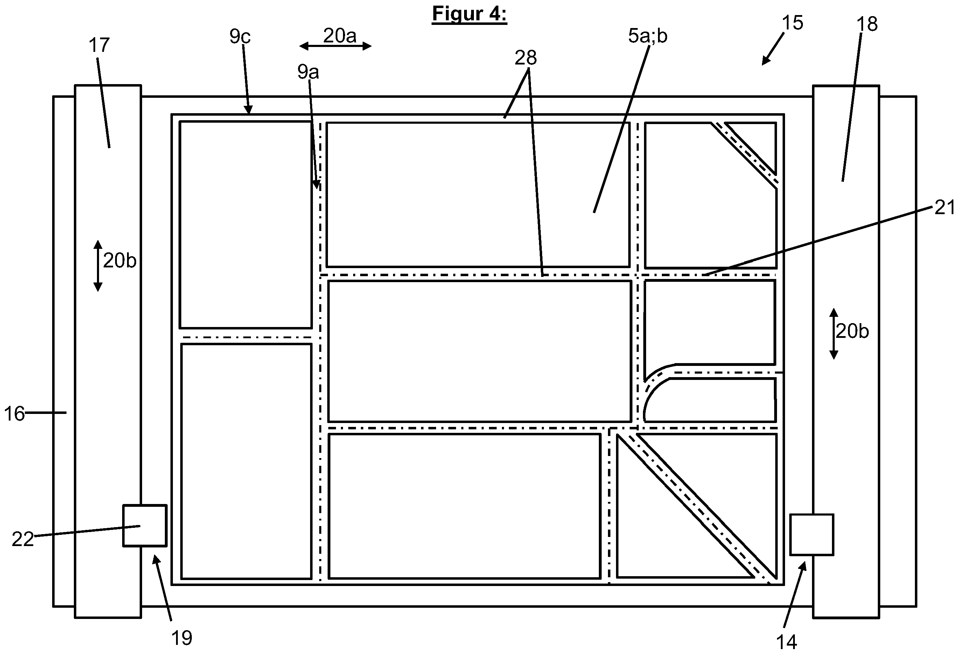

Die erfindungsgemäße Entschichtung erfolgt vorzugsweise mittels einer Entschichtungseinrichtung 14 (Fig. 2-4). Dabei ist die Entschichtungseinrichtung 14 vorzugsweise in eine Schneid- und Entschichtungsstation 15 (Fig. 4) integriert.

Die Schneid- und Entschichtungsstation 15 (Fig. 4) weist vorzugsweise einen Auflagetisch 16 zur Aufnahme einer Glasscheibe 5a;b, eine erste Verfahrbrücke 17, eine zweite Verfahrbrücke 18, eine Schneideinrichtung 19 und die erfindungsgemäße Entschichtungseinrichtung 14 auf.

Die beiden Verfahrbrücken 17;18 überspannen den Auflagetisch 16 ober- und/oder unterseitig und sind jeweils in eine erste Verfahrrichtung 20a hin- und her über der Glasscheibe 5a;b verfahrbar. Hierzu sind entsprechende Antriebsmittel vorhanden. Die erste Verfahrrichtung 20a ist parallel zu einer Glasscheibenebene bzw. zu den beiden Glasscheibenoberflächen 9a;b.

Die Schneideinrichtung 19 dient in an sich bekannter Weise zum Schneiden bzw. Ritzen der Glasscheibenoberfläche(n) 9a;b entlang vorgegebener Ritz- bzw. Trennlinien 21. Handelt es sich bei der Glasscheibe 5a;b um eine Einzelglasscheibe, wird lediglich eine der beiden Glasscheibenoberfläche(n) 9a;b geritzt. Die Schneideinrichtung 19 weist hierzu in an sich bekannter Weise einen Schneidkopf 22 mit einem Ritzwerkzeug, vorzugsweise einem Schneidrädchen, auf. Der Schneidkopf 22 ist in an sich bekannter Weise in eine zweite Verfahrrichtung 20b verfahrbar an der ersten Verfahrbrücke 17 gelagert. Hierzu sind entsprechende Antriebsmittel vorhanden. Die zweite Verfahrrichtung 20b ist senkrecht zur ersten Verfahrrichtung 20a und ebenfalls parallel zu einer Glasscheibenebene bzw. zu den beiden Glasscheibenoberflächen 9a;b. Das Schneidrädchen ist um eine horizontale Drehachse, die parallel zur Glasscheibenebene bzw. zu den beiden Glasscheibenoberflächen 9a;b ist, frei oder angetrieben drehbar. Zudem ist das Schneidrädchen um eine vertikale Drehachse, die senkrecht zur Glasscheibenebene bzw. zu den beiden Glasscheibenoberflächen 9a;b ist, frei oder angetrieben drehbar. Dadurch können in an sich bekannter Weise beliebige Schnittkonturen erzeugt werden.

Bei einer Verbundglasscheibe werden in an sich bekannter Weise beide Glasscheibenoberfläche(n) 9a;b, vorzugsweise gleichzeitig, geritzt. Die Glasscheibe 5a;b wird dann also ober- und unterseitig, vorzugsweise gleichzeitig, geritzt. Dazu sind zwei übereinander angeordnete Schneidköpfe 22 vorhanden.

Wie bereits erläutert, dient die Entschichtungseinrichtung 14 erfindungsgemäß zum Entschichten der Glasscheibe 5a;b durch mechanisches Entschichten und anschließendes Laserentschichten (Laserablation). Dazu weist die Entschichtungseinrichtung 14 eine Laserstrahlerzeugungseinrichtung 23 zur Erzeugung eines Laserstrahls 24 und einen Schleifkopf 25 auf.

Zudem ist die Entschichtungseinrichtung 14 in die zweite Verfahrrichtung 20b verfahrbar an der zweiten Verfahrbrücke 18 gelagert. Hierzu sind entsprechende Antriebsmittel vorhanden.

Der Schleifkopf 25 dient, wie oben erläutert, erfindungsgemäß zum streifenförmigen bzw. bahnenförmigen Abtragen der Funktionsbeschichtung 10 und gegebenenfalls der Schutzbeschichtung 11. Dazu weist der Schleifkopf 25 in an sich bekannter Weise zumindest ein Schleifwerkzeug, vorzugsweise zumindest eine Schleifscheibe bzw. ein Schleifrädchen 26, auf.

Das Schleifrädchen bzw. die Schleifscheibe 26 ist um eine horizontale Drehachse, die parallel zur Glasscheibenebene bzw. zu den beiden Glasscheibenoberflächen 9a;b ist, frei oder angetrieben drehbar. Zudem ist das Schleifrädchen 26 um eine vertikale Drehachse, die senkrecht zur Glasscheibenebene bzw. zu den beiden Glasscheibenoberflächen 9a;b ist, frei oder angetrieben drehbar. Dadurch können in Kombination mit der Bewegung der Entschichtungseinrichtung 14 entlang der zweiten Verfahrbrücke 18 in an sich bekannter Weise beliebige Entschichtungskonturen erzeugt werden.

Das Schleifrädchen 26 bzw. die Schleifscheibe weist zudem vorzugsweise eine Breite von 10 bis 30 mm auf. Infolgedessen kann mit dem Schleifrädchen 26 streifenförmig entschichtet werden, so dass entschichtete Streifen 27 (Fig. 2) entstehen, die eine Breite entsprechend der Breite des Schleifrädchens 26 aufweisen.

Die Laserstrahlerzeugungseinrichtung 23 dient, wie bereits erläutert, zum Abtragen der Beschichtungsrückstände 13. Dazu erzeugt die Laserstrahlerzeugungseinrichtung 23 den auf die Glasscheibenoberfläche 9a gerichteten Laserstrahl 24. Die Laserstrahlerzeugungseinrichtung 23 weist dazu eine Laserstrahlungsquelle und eine dazugehörige Optik auf. Dabei kann der Laserstrahl 24 von einer Ausgangsposition, in der er vertikal ausgerichtet ist, verschwenkt bzw. ausgelenkt werden.

Vorzugsweise handelt es sich bei der Laserstrahlungsquelle um einen Diodenlaser oder einen Faserlaser oder einen Festkörperlaser oder einen Gaslaser.

Vorzugsweise liegt die Wellenlänge des Laserstrahls 24 bei 300 nm bis 10,6 µm, bevorzugt bei 0,5 µm bis 1,5 µm.

Bzw. die Laserstrahlungsquelle erzeugt vorzugsweise einen Laserstrahl 24, dessen Wellenlänge im Infrarotbereich liegt.

Zudem erzeugt die Laserstrahlungsquelle vorzugsweise einen Laserstrahl 24, dessen Laserleistung bei 1 W bis 10 kW, bevorzugt bei 10 W bis 1 kW, besonders bevorzugt bei 500 W bis 1 kW, liegt.

Der Laserstrahl 24 kann zudem gepulst oder kontinuierlich sein.

Des Weiteren weist der Laserstrahl 24 im Bereich der Glasscheibenoberfläche 9a entweder einen runden oder einen länglichen, insbesondere linienförmigen, Strahlquerschnitt auf. Bevorzugt ist der linienförmige Strahlquerschnitt. Der Strahlquerschnitt wird durch die Optik der Laserstrahlerzeugungseinrichtung 23 erzeugt.

Im Folgenden wird nun das erfindungsgemäße Entschichtungsverfahren näher erläutert:
Wie bereits erläutert, wird zunächst die Funktionsbeschichtung 10 und, falls vorhanden, die darüber angeordnete Schutzbeschichtung 11 mechanisch mittels des Schleifrädchens 26 in an sich bekannter Weise abgeschliffen. Um die gewünschten Konturen abschleifen zu können, wird in an sich bekannter Weise der Schleifkopf 25 mitsamt dem Schleifrädchen 26 in die zweite Verfahrrichtung 20b entlang der zweiten Verfahrbrücke 18 verfahren und/oder es wird die zweite Verfahrbrücke 18 in die erste Verfahrrichtung 20a verfahren. Dabei wird das Schleifrädchen 26 einerseits um seine Raddrehachse gedreht, und, wenn notwendig, um seine vertikale Hochachse verschwenkt.

Da, insbesondere bei der Herstellung von Glasscheiben 5a;b für Stufenglas 4, die Breite des zu entschichtenden Bereichs deutlich größer als bei der herkömmlichen Randentschichtung und somit breiter als die Breite des Schleifrädchen 26 ist, wird vorzugsweise bahnenweise bzw. streifenweise entschichtet. Das heißt, das Schleifrädchen 26 fährt die Glasscheibenoberfläche 9a;b mehrmals entlang zueinander benachbarter Bahnen ab. Dadurch werden mehrere, zueinander benachbarte, mechanisch entschichtete Streifen 27 (Fig. 2) erzeugt. Die nebeneinander angeordneten mechanisch entschichteten Streifen 27 bilden einen, insbesondere bahnenförmigen, mechanisch entschichteten Bereich 29 bzw. eine mechanisch entschichtete Bahn 29.

Dabei weist der mechanisch entschichtete Bereich 29 bzw. weisen die einzelnen entschichteten Streifen 27 jeweils Beschichtungsrückstände 13 auf. Die Beschichtungsrückstände 13 bestehen aus Funktionsbeschichtungsmaterial und gegebenenfalls auch aus Schutzbeschichtungsmaterial.

Des Weiteren können auch zwischen den mechanisch entschichteten Streifen 27 jeweils streifenförmige Beschichtungsrückstände 13 vorhanden sein.

Alternativ dazu wird das Schleifrädchen 26 so verfahren, dass sich die mechanisch entschichteten Streifen 27 überschneiden bzw. übergreifen. Auch in diesem Fall sind aber meist linienförmige Beschichtungsrückstände 13 zwischen den mechanisch entschichteten Streifen 27 vorhanden.

Anschließend werden deshalb erfindungsgemäß die Beschichtungsrückstände 13 mittels Laserablation entfernt. Die Beschichtungsrückstände 13 werden dabei vollständig abgetragen, insbesondere verdampft bzw. verbrannt.

Dazu wird die Laserstrahlerzeugungseinrichtung 23 entlang des mechanisch entschichteten Bereichs 29, insbesondere der mechanisch entschichteten Streifen 27, und über diese(n) hinweg verfahren. Vorzugsweise wird dazu die Laserstrahlerzeugungseinrichtung 23 in die zweite Verfahrrichtung 20b entlang der zweiten Verfahrbrücke 18 verfahren und/oder es wird die zweite Verfahrbrücke 18 in die erste Verfahrrichtung 20a verfahren.

Die Bewegung des Laserstrahls 24 erfolgt somit mittels der Optik der Laserstrahlerzeugungseinrichtung 23 und/oder durch Bewegung der Laserstrahlerzeugungseinrichtung 23 entlang der zweiten Verfahrbrücke 18 und/oder durch Bewegung der zweiten Verfahrbrücke 18.

Weist der Laserstrahl 24 einen punktförmigen Strahlquerschnitt auf, wird er insbesondere mittels der Optik der Lasererzeugungseinrichtung 23 senkrecht zur Bewegungsrichtung der Lasererzeugungseinrichtung 23 hin- und her bewegt. Er oszilliert somit quer, insbesondere senkrecht, zur Längserstreckung des mechanisch entschichteten Bereichs 29 und über die gesamte Breite des mechanisch entschichteten Bereichs 29. Die Optik der Lasererzeugungseinrichtung 23 ist nämlich in der Lage, bevorzugt mit Hilfe von zwei verstellbaren Spiegeln (Scanoptik), den Laserstrahl 24 in einem Bereich (Scanfeld) von z.B. 100 mm x 100 mm zu bewegen.

Weist der Laserstrahl 24 einen länglichen, insbesondere linienförmigen, Strahlquerschnitt auf, ist das Oszillieren nicht unbedingt notwendig. Vorzugsweise erstreckt sich in diesem Fall die Laserlinie (die auch z.B. leicht elliptisch sein kann) über die gesamte Breite des mechanisch entschichteten Bereichs 29. Zudem ist die Laserlinie vorzugsweise quer, insbesondere senkrecht, zur Längserstreckung des mechanisch entschichteten Bereichs 29. Somit können alle nebeneinander angeordneten mechanisch entschichteten Streifen 27 bzw. kann der gesamte Bereich 29 mittels der Laserlinie in einem einzigen Arbeitsgang gleichzeitig überfahren werden und entschichtet werden. Dies ist besonders vorteilhaft, da die Entschichtung deutlich schneller erfolgt als mit dem oszillierenden Laserstrahl 24 mit punktförmigem Strahlquerschnitt.

Selbstverständlich kann aber auch der Laserstrahl 24 mit dem länglichen, insbesondere linienförmigen, Strahlquerschnitt oszillieren, falls notwendig, insbesondere falls die Länge der Laserlinie nicht ausreichend ist, um alle nebeneinander angeordneten mechanisch entschichteten Streifen 27 gleichzeitig zu überfahren und dabei zu entschichten. Dennoch ist die Entschichtung auch in diesem Fall deutlich schneller als mit dem Laserstrahl 24 mit punktförmigem Strahlquerschnitt.

Die Laserstrahlerzeugungseinrichtung 23 fährt dabei vorzugsweise lediglich einmal über den mechanisch entschichteten Bereich 29, insbesondere die zueinander benachbarten mechanisch entschichteten Streifen 27, hinweg und entfernt dabei alle Beschichtungsrückstände 13 des mechanisch entschichteten Bereichs 29, insbesondere der zueinander benachbarten mechanisch entschichteten Streifen 27 und der dazwischen vorhandenen Beschichtungsrückstände 13, in einem Arbeitsgang (siehe Figur 2).

Nach der Laserentschichtung ist die Glasscheibenoberfläche 9a;b vollständig entschichtet. Die Glasscheibenoberfläche 9a;b weist also nach der Laserentschichtung Entschichtungsspuren bzw. Entschichtungsbahnen bzw. Entschichtungsstreifen bzw. Entschichtungsbereiche 28 auf, in denen die Glasscheibenoberfläche 9a;b vollständig bzw. rückstandslos entschichtet ist.

Je nachdem, ob eine bereits auf Endmaß geschnittene Glasscheibe 5a;b (Fig. 2) oder eine noch zu schneidende Rohglasscheibe 5a;b (Fig. 4) entschichtet wird, entspricht die Breite der Entschichtungsspuren 28 der einfachen oder doppelten später gewünschten Entschichtungsbreite einer ihr Endmaß aufweisenden Glasscheibe 5a;b. Die spätere Entschichtungsbreite entspricht dabei dem Überstand des überstehenden Glasscheibenbereichs 12 zuzüglich der Breite eines für den Randverbund benötigten entschichteten Bereichs.

Bei einer noch zu schneidenden Rohglasscheibe 5a;b (Fig. 4) werden im Inneren der Rohglasscheibe 5a;b die Bereiche beidseits und entlang der noch einzubringenden, späteren Trenn- bzw. Ritzlinien 21 entschichtet. Die Entschichtungsspuren 28 erstrecken sich jeweils entlang jeweils der späteren Ritz- bzw. Trennlinie 21 und beidseits neben dieser. Insbesondere ist die Ritz- bzw. Trennlinie 21 mittig in der Entschichtungsspur 28 angeordnet. Die Rohglasscheibe 5a;b wird deshalb in doppelter Entschichtungsbreite beidseitig neben der späteren Ritz- bzw. Trennlinie 21 entschichtet.

Entlang der Glasscheibenkanten 9d kann die Entschichtung - bei entsprechendem Maß der Rohglasscheibe 5a;b und bei ausreichender Qualität der Glasscheibenkanten 9d -in einfacher Entschichtungsbreite erfolgen.

Gleiches gilt für bereits auf Endmaß geschnittenen Glasscheiben 5a;b (Fig. 2), bei denen nur noch eine Entschichtung entlang der Glasscheibenkanten 9d, aber nicht mehr im Bereich innerhalb der Glasscheibenkanten 9d erfolgt. Auch hier wird in einfacher Entschichtungsbreite entschichtet.

Nach dem Entschichten werden dann bei einer Rohglasscheibe 5a;b die Trenn- bzw. Ritzlinien 21 mittels des Schneidkopfes 22 erzeugt und dann die Rohglasscheibe 5a;b an den Ritz- bzw. Trennlinien 21 in an sich bekannter Weise in einzelne Glasscheiben 5a;b auf Endmaß gebrochen.

Sollen die ihr Endmaß aufweisenden Glasscheiben 5a;b zur Herstellung eines Stufenglases 4 verwendet werden, werden sie zudem in dem oder den später überstehenden Glasscheibenbereichen 12 im Bereich der Entschichtungsspuren 28 farbig beschichtet. Die Beschichtung erfolgt vorzugsweise durch Bedrucken, bevorzugt mit keramischer Farbe, und anschließendes Einbrennen der Farbe. Das Bedrucken kann z.B. mittels Siebdruck erfolgen. Das Beschichten kann aber z.B. auch durch Auftragen von UV-aushärtender Farbe erfolgen.

Vorteil des erfindungsgemäßen Entschichtungsverfahrens ist, dass die Glasscheiben 5a;b für das Stufenglas 4 flexibel von den Stufenglasherstellern selbst hergestellt werden können, ohne lange Lieferzeiten des Festmaßbeschichters und unter Einsparung von Kosten.

Da mittels der Laserentschichtung erfindungsgemäß nur Beschichtungrückstände bzw. -reste 13, die von der mechanischen Entschichtung zurückbleiben, entfernt werden, kann die Laserentschichtung mit deutlich höherer Geschwindigkeit durchgeführt werden, als bei einer vollständigen Laserentschichtung, bei der das gesamte Material mittels Laser abgetragen wird. Dies macht sich insbesondere bei der Entschichtung von Glasscheiben 5a;b für Stufenglas 4 bemerkbar, da hier die Breite der Entschichtungsspuren 28 deutlich größer ist als bei der herkömmlichen Randentschichtung.

Vorzugsweise werden Entschichtungsspuren 28 mit einer Breite von mindestens 1 mm, bevorzugt mindestens 20 mm erzeugt. Bzw. vorzugsweise werden Entschichtungsspuren 28 mit einer Breite von 1 bis 30 mm erzeugt.

Des Weiteren wird durch die anschließende Laserentschichtung der Qualitätsnachteil der mechanischen Entschichtung, nämlich das Hinterlassen von Rückständen 13 durch nicht vollständige Entfernung der Funktionsbeschichtung 10 kompensiert.

Mittels des erfindungsgemäßen Entschichtungsverfahrens ist die Entschichtungsqualität somit sehr hoch. Durch das "Laserfinishing" bzw. "Laserpolieren" werden sehr glatte entschichtete Oberflächen erzeugt, die ohne weiteres mit Farbe beschichtet werden können und verklebt werden können. Die Oberfläche wird dabei nicht beschädigt.

Des Weiteren ist es, wie beschrieben, möglich, das Entschichtungsverfahren in eine vorhandene Glasschneidanlage, z.B. eine Verbundglasschneidanlage, zu integrieren. An die Glasschneidanlage, z.B. die Verbundglasschneidanlage, kann sich dann wiederum eine Weiterbearbeitungsanlage anschließen. Bei der Weiterbearbeitungsanlage handelt es sich vorzugsweise um eine Isolierglaslinie zur Weiterbearbeitung der Glasscheiben 5a;b zu einer Isolierverglasung, vorzugsweise um eine Stufenglaslinie zur Weiterbearbeitung der Glasscheiben 5a;b zu Stufenglas 4. In der Isolierglaslinie, bevorzugt der Stufenglaslinie, werden die Scheibenränder der Glasscheiben 5a;b mit dem Abstandhalterrahmen 6 verklebt.

Im Rahmen der Erfindung liegt es dabei selbstverständlich auch, dass die Schneideinrichtung 19 von der Entschichtungseinrichtung 14 getrennt ist, also in einer anderen Station angeordnet ist.

Außerdem können der Schleifkopf 25 und die Laserstrahlerzeugungseinrichtung 23 auch voneinander entkoppelt sein. Das heißt, sie können getrennt voneinander verfahrbar sein und/oder auch an unterschiedlichen Verfahrbrücken befestigt sein.

Vorzugsweise sind sie allerdings miteinander gekoppelt bzw. miteinander verfahrbar. Das Schneidrädchen 26 ist dann vorzugsweise anhebbar und absenkbar an dem Schleifkopf 22 befestigt, damit es in Eingriff und außer Eingriff mit der Glasscheibe 5a;b gebracht werden kann. Da der Schleifkopf 25 und die Laserstrahlerzeugungseinrichtung 23 mechanisch gekoppelt sind, werden sie zusammen bzw. synchron miteinander entlang der zu erzeugenden Entschichtungsspuren 28 verfahren, wobei der Schleifkopf 25 selbstverständlich in Fahrtrichtung der Laserstrahlerzeugungseinrichtung 23 vorgeordnet ist bzw. vor dieser angeordnet ist.

Zudem kann das Erzeugen der Konturen auch dadurch erreicht werden, dass die Entschichtungseinrichtung 14 an einer stationären Brücke verfahrbar ist und die Glasscheibe 5a;b während des Entschichtungsvorgangs bewegt wird. Es kommt nur darauf an, dass die Entschichtungseinrichtung 14 samt Schleifrädchen 26 und/oder Laserstrahl 24 und die Glasscheibe 5a;b entsprechende Relativbewegungen zueinander ausführen. Gleiches gilt für den Schneidvorgang.

Des Weiteren liegt es selbstverständlich auch im Rahmen der Erfindung, dass lediglich eine einzige Verfahrbrücke vorhanden ist und die Schneideinrichtung 19 und die Entschichtungseinrichtung 14 an derselben Verfahrbrücke angeordnet sind. Dies ist sogar bevorzugt.

Schleifkopf 25 und die Laserstrahlerzeugungseinrichtung 23 können aber auch an unterschiedlichen Verfahrbrücken angeordnet sein, auch wenn es anders bevorzugt ist.

Des Weiteren kann das Schleifrädchen 26 eine Breite aufweisen, die der Breite der zu erzeugenden Entschichtungsspur 28 entspricht, so dass lediglich ein einziger mechanisch entschichteter Streifen 27 ausreicht.

Zudem kann der Laserstrahl 24 direkt auf die Beschichtungsrückstände 13 gerichtet werden, was bevorzugt ist, oder durch die Glasscheibe 5a;b durch gestrahlt werden.

Vorzugsweise erfolgt das mechanische Abtragen zudem durch Abschleifen. Es kann aber auch z.B. durch Sandstrahlen erfolgen.

Das erfindungsgemäße Entschichtungsverfahren ist zudem auch für die Herstellung von Glasscheiben für herkömmliche Isolierverglasungen vorteilhaft. Je höher nämlich die Oberflächenqualität im Bereich der Verklebung ist, desto hochwertiger und beständiger ist die Verklebung. Denn aufgrund von Beschichtungsrückständen im Bereich der Klebefläche oder Beschädigungen der Glasoberfläche (aufgrund zu starker mechanischer Entschichtung) können sich im Laufe der Zeit Kanäle bilden, durch die das sich im Scheibenzwischenraum befindliche Gas entweicht. Gleichzeitig kann Sauerstoff in den Scheibenzwischenraum diffundieren. Und dieser führt zu einer Verfärbung der Funktionsbeschichtung aufgrund von Oxidation.

### Ausführungsbeispiel:

Eine Frontplatte für ein structural glazing Produkt mit einer handelsüblichen Wärmedämmschicht (Low-Schicht) wurde in den Randbereichen mechanisch mit einer handelsüblichen Schleifscheibe entschichtet, d.h. die Low-E-Schicht wurde mehrheitlich von der Glasscheibenoberfläche abgetragen. Die Breite des mechanisch entschichteten Randbereiches betrug an drei Seiten 10 mm und an einer Seite 100 mm. Nach der mechanischen Randentschichtung blieben unter anderem linienförmige Rückstände aus der Funktionsbeschichtung zurück. Bei dem 100 mm breiten Rand waren zusätzlich die einzelnen Überfahrten der Schleifscheibe sichtbar, da an den Rändern der durch eine Überfahrt mittels der Schleifscheibe mechanisch entschichteten Streifen Reste der Funktionsbeschichtung verblieben. Der entschichtete Randbereich war mit dem menschlichen Auge als inhomogen entschichtet erkennbar.

Um diese Inhomogenität zu entfernen, wurde mit einem Lasergerät (Faserlaser, Wellenlänge = 1,06 µm, Leistung = 20 W) der entschichtete Randbereich zusätzlich bestrahlt, indem der punktförmige Querschnitt des Laserstrahles (Radius = 100 µm) oszillierend über den entschichteten Randbereich geführt wurde. Dabei verdampften die Rückstände der Funktionsbeschichtung, die nach der mechanischen Randentschichtung auf der Glasoberfläche verblieben waren. Nach diesem Prozess besaß der Randbereich das Erscheinungsbild einer unbeschichteten Glasoberfläche und war vollkommen homogen.

## Patentansprüche

1. Entschichtungsverfahren zum Randentschichten von Glasscheiben (5a;b), wobei die Glasscheiben (5a;b) zumindest an einer ihrer beiden Glasscheibenoberflächen (9a;b) eine Funktionsbeschichtung (10) aufweisen,
wobei die Funktionsbeschichtung (10) zum Randentschichten bereichsweise mechanisch abgetragen, insbesondere abgeschliffen, wird,
**dadurch gekennzeichnet, dass**
nach dem mechanischen Abtragen der Funktionsbeschichtung (10) verbliebene Beschichtungsrückstände (13) mittels Laserstrahlung abgetragen werden.

2. Entschichtungsverfahren nach Anspruch 1,
**dadurch gekennzeichnet, dass**
beim Entschichten streifenförmige Entschichtungsspuren (28) auf den Glasscheiben (5a;b) erzeugt werden, wobei die Glasscheiben (5a;b) im Bereich der Entschichtungsspuren (28) vollständig entschichtet sind,
wobei vorzugsweise Entschichtungsspuren (28) mit einer Breite von mindestens 1 mm, bevorzugt mindestens 20 mm und/oder Entschichtungsspuren (28) mit einer Breite von 1 bis 30 mm erzeugt werden.

3. Entschichtungsverfahren nach einem der vorhergehenden Ansprüche, **dadurch gekennzeichnet, dass**
die Beschichtungsrückstände (13) mittels der Laserstrahlung verdampft und/oder verbrannt werden.

4. Entschichtungsverfahren nach einem der vorhergehenden Ansprüche, **dadurch gekennzeichnet, dass**
zur Erzeugung einer Entschichtungsspur (28) jeweils zunächst mechanisch streifenförmig bzw. bahnenförmig entschichtet wird, wobei vorzugsweise mehrere zueinander benachbarte, mechanisch entschichtete Streifen (27) erzeugt werden, wobei die mechanisch entschichteten Streifen (27) Beschichtungsrückstände (13) aufweisen,
wobei vorzugsweise die zueinander benachbarten mechanisch entschichteten Streifen (27) nacheinander erzeugt werden.

5. Entschichtungsverfahren nach Anspruch 4,
**dadurch gekennzeichnet, dass**
die Beschichtungsrückstände (13) eines mechanisch entschichteten, bahnenförmigen Bereichs (29), insbesondere die Beschichtungsrückstände (13) der zueinander benachbarten mechanisch entschichteten Streifen (27) und gegebenenfalls die zwischen den zueinander benachbarten mechanisch entschichteten Streifen (27) vorhandenen Beschichtungsrückstände (13), in einem Arbeitsgang mittels der Laserstrahlung abgetragen werden.

6. Entschichtungsverfahren nach einem der vorhergehenden Ansprüche, **dadurch gekennzeichnet, dass**
die Glasscheiben (5a;b) eine die Funktionsbeschichtung (10) überdeckende Schutzbeschichtung (11) aufweisen, wobei die Schutzbeschichtung (11) gleichzeitig in einem Arbeitsgang mit der Funktionsbeschichtung (10) mechanisch abgetragen wird,
wobei die Schutzbeschichtung (11) vorzugsweise eine nicht abziehbare Polymerschutzschicht oder eine abziehbare Schutzfolie ist.

7. Entschichtungsverfahren nach einem der vorhergehenden Ansprüche, **dadurch gekennzeichnet, dass**
zur Laserabtragung
a) ein Laserstrahl (24) mit einer Wellenlänge im Infrarotbereich, und/oder
b) ein Laserstrahl (24) mit einer Wellenlänge von 300 nm bis 10,6 µm, bevorzugt von 0,5 µm bis 1,5 µm,
und/oder
c) ein Laserstrahl (24) mit einer Laserleistung von 1 W bis 10 kW, vorzugsweise von 10 W bis 1 kW, bevorzugt von 500 W bis 1 kW, und/oder
d) ein Laserstrahl (24) mit einem punktförmigen Strahlquerschnitt oder mit einem länglichen, insbesondere mit einem linienförmigen, Strahlquerschnitt,
verwendet wird.

8. Entschichtungsverfahren nach einem der vorhergehenden Ansprüche, **dadurch gekennzeichnet, dass**
ein Laserstrahl (24) mit einem länglichen, insbesondere mit einem linienförmigen, Strahlquerschnitt verwendet wird, und sich eine Laserlinie des Laserstrahls (24) quer zur Längserstreckung des mechanisch entschichteten Bereichs (29), bevorzugt quer zur Längserstreckung der zueinander benachbarten mechanisch entschichteten Streifen (27), erstreckt.

9. Entschichtungsverfahren nach einem der vorhergehenden Ansprüche, **dadurch gekennzeichnet, dass**
zur Laserabtragung, ein, vorzugsweise quer zur Längserstreckung des mechanisch entschichteten Bereichs (29), bevorzugt quer zur Längserstreckung der zueinander benachbarten mechanisch entschichteten Streifen (27), oszillierender Laserstrahl (24) wird.

10. Entschichtungsverfahren nach Anspruch 8,
**dadurch gekennzeichnet, dass**
sich der Laserstrahl (24) über die gesamte Breite des mechanisch entschichteten Bereichs (29), bevorzugt über die gesamte Breite der zueinander benachbarten mechanisch entschichteten Streifen (27), erstreckt und nicht oszilliert.

11. Entschichtungsverfahren nach einem der vorhergehenden Ansprüche, **dadurch gekennzeichnet, dass**
die Mittel zum mechanischen Abtragen der Funktionsbeschichtung (10) und die Mittel zur Abtragung der verbliebenen Beschichtungsrückstände (13) mittels Laserstrahlung zusammen miteinander verfahren werden.

12. Entschichtungseinrichtung (14) zum Randentschichten von Glasscheiben (5a;b), wobei die Glasscheiben (5a;b) zumindest an einer ihrer beiden Glasscheibenoberflächen (9a;b) eine Funktionsbeschichtung (10) aufweisen, wobei die Entschichtungseinrichtung (14) eine Schleifeinrichtung zum Abschleifen der Funktionsbeschichtung (10) aufweist, insbesondere Entschichtungseinrichtung (14) zur Durchführung des Verfahrens gemäß einem der vorhergehenden Ansprüche,
**dadurch gekennzeichnet, dass**
die Entschichtungseinrichtung (14) eine Laserstrahlerzeugungseinrichtung (23) zum Abtragen von nach dem mechanischen Abtragen der Funktionsbeschichtung (10) verbliebenen Beschichtungsrückständen (13) mittels Laserstrahlung aufweist.

13. Entschichtungseinrichtung (14) nach Anspruch 12,
**dadurch gekennzeichnet, dass**
die Laserstrahlerzeugungseinrichtung (23) Mittel zur Erzeugung eines Laserstrahls (24) mit einer Wellenlänge im Infrarotbereich und/oder mit einer Wellenlänge von 300 nm bis 10,6 µm, bevorzugt von 0,5 µm bis 1,5 µm, und/oder mit einer Laserleistung von 1 W bis 10 kW, vorzugsweise von 10 W bis 1 kW, bevorzugt von 500 W bis 1 kW, aufweist.

14. Entschichtungseinrichtung (14) nach Anspruch 12 oder 13,
**dadurch gekennzeichnet, dass**
a) die Laserstrahlerzeugungseinrichtung (23) Mittel zur Erzeugung eines Laserstrahls (24) mit einem punktförmigen Strahlquerschnitt oder einem länglichen, insbesondere linienförmigen, Strahlquerschnitt aufweist,
und/oder
b) die Laserstrahlerzeugungseinrichtung (23) Mittel, insbesondere eine Optik, zum Oszillieren des Laserstrahls (24) aufweist,
und/oder
c) die Schleifeinrichtung (25) und die Laserstrahlerzeugungseinrichtung (23) miteinander derart mechanisch gekoppelt sind, dass sie zusammen verfahrbar sind.

15. Verfahren zur Herstellung einer Glasscheibe (5a) für ein Stufenglas (4), wobei die Glasscheibe (5a) benachbart zu zumindest einer ihrer Glasscheibenkanten (9b) entschichtet wird und anschließend auf die entschichtete Glasscheibenoberfläche (9a) eine farbige Beschichtung aufgebracht wird,
**dadurch gekennzeichnet, dass**
das Entschichten gemäß einem der Ansprüche 1 bis 11 und/oder unter Verwendung einer Entschichtungseinrichtung (14) gemäß einem der Ansprüche 12 bis 14 erfolgt.

## Claims

1. A decoating method for edge decoating of glass sheets (5a;b), wherein the glass sheets (5a;b) have a functional coating (10) on at least one of their two glass sheet surfaces (9a;b),
wherein, for edge decoating, the functional coating (10) is mechanically removed, in particular ground off, in areas,
**characterized in that**
coating residues (13) remaining after mechanical removal of the functional coating (10) are removed by means of laser radiation.

2. The decoating method according to claim 1,
**characterized in that**
strip-shaped decoating tracks (28) are produced on the glass sheets (5a;b) during decoating, the glass sheets (5a;b) being completely decoated in the region of the decoating tracks (28),
wherein preferably decoating tracks (28) having a width of at least 1 mm, preferably of at least 20 mm, and/or decoating tracks (28) having a width of 1 to 30 mm are produced.

3. The decoating method according to any one of the preceding claims, **characterized in that**
the coating residues (13) are vaporized and/or burned by means of the laser radiation.

4. The decoating method according to any one of the preceding claims, **characterized in that**
to produce a decoating track (28), decoating is in each case first carried out mechanically in the form of strips or paths, wherein preferably a plurality of mutually adjacent, mechanically decoated strips (27) being produced, the mechanically decoated strips (27) having coating residues (13),
wherein preferably the mechanically decoated strips (27) adjacent to each other are produced one after the other.

5. The decoating method according to claim 4,
**characterized in that**
the coating residues (13) of a mechanically decoated, path-shaped region (29), in particular the coating residues (13) of the mechanically decoated strips (27) adjacent to one another and, if applicable, the coating residues (13) present between the mechanically decoated strips (27) adjacent to one another, are removed in one operation by means of the laser radiation.

6. The decoating method according to any one of the preceding claims, **characterized in that**
the glass sheets (5a;b) have a protective coating (11) covering the functional coating (10), the protective coating (11) being removed mechanically at the same time as the functional coating (10) in a single operation, wherein preferably the protective coating (11) is a non-peelable polymer protective layer or a peelable protective film.

7. The decoating method according to any one of the preceding claims, **characterized in that**
a) a laser beam (24) having a wavelength in the infrared range, and/or
b) a laser beam having a wavelength from 300 nm to 10,6 µm, preferably from 0.5 µm to 1.5 µm,
and/or
c) a laser beam (24) having a laser power of 1 W to 10 kW, preferably of 10 W to 1 kW, preferably of 500 W to 1 kW,
and/or
d) a laser beam (24) having a point-shaped beam cross-section or having an elongated, in particular a linear, beam cross-section,
is used for laser ablation.

8. The decoating method according to any one of the preceding claims, **characterized in that**
a laser beam (24) having an elongated, in particular a linear, beam cross-section is used, and a laser line of the laser beam (24) extends transversely to the longitudinal extension of the mechanically decoated region (29), preferably transversely to the longitudinal extension of the mutually adjacent mechanically decoated strips (27).

9. The decoating method according to any one of the preceding claims, **characterized in that**
for laser ablation, an oscillating laser beam (24), preferably oscillating transversely to the longitudinal extension of the mechanically decoated region (29), preferably oscillating transversely to the longitudinal extension of the mutually adjacent mechanically decoated strips (27).

10. The decoating method according to claim 8,
**characterized in that**
the laser beam (24) extends over the entire width of the mechanically decoated area (29), preferably over the entire width of the mutually adjacent mechanically decoated strips (27), and does not oscillate.

11. The decoating method according to any one of the preceding claims, **characterized in that**
the means for mechanically removing the functional coating (10) and the means for removing the remaining coating residues (13) by means of laser radiation are moved together.

12. A decoating device (14) for edge decoating of glass sheets (5a;b), the glass sheets (5a;b) having a functional coating (10) on at least one of their two glass sheet surfaces (9a;b), the decoating device (14) having a grinding device for grinding off the functional coating (10), in particular decoating device (14) for carrying out the method according to one of the preceding claims,
**characterized in that**
the decoating device (14) comprises a laser beam generating device (23) for removing coating residues (13) remaining after mechanical removal of the functional coating (10) by means of laser radiation.

13. The decoating device (14) according to claim 12,
**characterized in that**
the laser beam generating device (23 ) has means for generating a laser beam (24 ) having a wavelength in the infrared range and/or having a wavelength from 300 nm to 10.6 µm, preferably from 0.5 µm to 1.5 µm, and/or having a laser power of from 1 W to 10 kW, preferably from 10 W to 1 kW, preferably from 500 W to 1 kW.

14. The decoating device (14) according to claim 12 or 13,
**characterized in that**
a) the laser beam generating device (23) has means for generating a laser beam (24) having a point-shaped beam cross-section or an elongated, in particular linear, beam cross-section,
and/or
b) the laser beam generating device (23) has means, in particular an optical system, for oscillating the laser beam (24),
and/or
c) the grinding device (25) and the laser beam generating device (23) are mechanically coupled to each other in such a way that they can be moved together.

15. A method of manufacturing a glass sheet (5a) for a stepped glass (4), wherein the glass sheet (5a) is decoated adjacent to at least one of its glass sheet borders (9b) and a colored coating is subsequently applied to the decoated glass sheet surface (9a),
**characterized in that**
decoating is carried out according to any one of claims 1 to 11 and/or by using a decoating device (14) according to any one of claims 12 to14.

## Revendications

1. Procédé de décapage pour le décapage des bords de vitres (5a;b), les vitres (5a;b) comprenant un revêtement fonctionnel (10) au moins sur l'une de leurs deux surfaces de vitre (9a;b),
où, pour le décapage des bords de vitres, le revêtement fonctionnel (10) est enlevé mécaniquement, en particulier meulé, dans certaines zones,
**caractérisé en ce que**
après l'enlèvement mécanique du revêtement fonctionnel (10), des résidus de revêtement (13) restants sont enlevés au moyen d'un rayonnement laser.

2. Procédé de décapage selon la revendication 1,
**caractérisé en ce que**
lors du décapage, des traces de décapage (28) en forme de bandes sont produites sur les vitres (5a;b), les vitres (5a;b) étant complètement décapées dans la zone des traces de décapage (28),
où, de préférence, des traces de décapage (28) d'une largeur d'au moins 1 mm, de préférence d'au moins 20 mm et/ou des traces de décapage (28) d'une largeur de 1 à 30 mm sont produites.

3. Procédé de décapage selon l'une quelconque des revendications précédentes,
**caractérisé en ce que**
les résidus de revêtement (13) sont vaporisés et/ou brûlés au moyen du rayonnement laser.

4. Procédé de décapage selon l'une quelconque des revendications précédentes,
**caractérisé en ce que**
pour produire une trace de décapage (28), on procède à chaque fois d'abord à un décapage mécanique en forme de bande ou de trajet, où, de préférence, plusieurs bandes (27) décapées mécaniquement voisines les unes des autres sont produites, où les bandes (27) décapées mécaniquement comprennent des résidus de revêtement (13), où, de préférence, les bandes (27) décapées mécaniquement voisines les unes des autres sont produites les unes après les autres.

5. Procédé de décapage selon la revendication 4,
**caractérisé en ce que**
les résidus de revêtement (13) d'une zone décapée mécaniquement en forme de trajet (29), en particulier les résidus de revêtement (13) des bandes décapées mécaniquement (27) voisines les unes des autres et éventuellement les résidus de revêtement (13) présents entre les bandes décapées mécaniquement (27) voisines les unes des autres, sont enlevés en une seule opération au moyen du rayonnement laser.

6. Procédé de décapage selon l'une quelconque des revendications précédentes,
**caractérisé en ce que**
les vitres (5a;b) comprennent un revêtement de protection (11) recouvrant le revêtement fonctionnel (10), le revêtement de protection (11) étant enlevé mécaniquement en même temps que le revêtement fonctionnel (10) en une seule opération,
le revêtement de protection (11) étant de préférence une couche protectrice polymère non pelable ou un film protecteur pelable.

7. Procédé de décapage selon l'une quelconque des revendications précédentes,
**caractérisé en ce que**
pour l'ablation au laser
a) un rayon laser (24) ayant une longueur d'onde dans l'infrarouge, et/ou
b) un rayon laser (24) ayant une longueur d'onde de 300 nm à 10,6 µm, de préférence de 0,5 µm à 1,5 µm,
et/ou
c) un rayon laser (24) d'une puissance laser de 1 W à 10 kW, de préférence de 10 W à 1 kW, de manière particulièrement préférée de 500 W à 1 kW,
et/ou
d) un rayon laser (24) avec une section transversale de rayon ponctuelle ou avec une section transversale de rayon allongée, en particulier avec une section transversale de rayon linéaire,
est utilisé.

8. Procédé de décapage selon l'une quelconque des revendications précédentes,
**caractérisé en ce que**
on utilise un rayon laser (24) avec une section transversale de rayon allongée, en particulier avec une section transversale de rayon linéaire, et une ligne laser du rayon laser (24) s'étend transversalement à l'extension longitudinale de la zone (29) décapée mécaniquement, de préférence transversalement à l'extension longitudinale des bandes (27) décapées mécaniquement voisines les unes des autres.

9. Procédé de décapage selon l'une quelconque des revendications précédentes,
**caractérisé en ce que**
pour l'ablation au laser, un rayon laser (24) oscillant, de préférence oscillant transversalement à l'extension longitudinale de la zone (29) décapée mécaniquement, de manière particulièrement préférée oscillant transversalement à l'extension longitudinale des bandes (27) décapées mécaniquement voisines les unes des autres, est utilisé.

10. Procédé de décapage selon la revendication 8,
**caractérisé en ce que**
le rayon laser (24) s'étend sur toute la largeur de la zone (29) décapée mécaniquement, de préférence sur toute la largeur des bandes (27) décapées mécaniquement voisines les unes des autres, et n'oscille pas.

11. Procédé de décapage selon l'une quelconque des revendications précédentes,
**caractérisé en ce que**
les moyens pour l'enlèvement mécanique du revêtement fonctionnel (10) et les moyens pour l'enlèvement des résidus de revêtement restants (13) au moyen d'un rayonnement laser sont déplacés ensemble.

12. Dispositif de décapage (14) pour le décapage des bords de vitres (5a;b), les vitres (5a;b) comprenant au moins sur l'une de leurs deux surfaces de vitre (9a;b) un revêtement fonctionnel (10), le dispositif de décapage (14) comprenant un dispositif de meulage pour le meulage du revêtement fonctionnel (10), en particulier dispositif de décapage (14) pour la mise en oeuvre du procédé selon l'une des revendications précédentes, **caractérisé en ce que**
le dispositif de décapage (14) comprend un dispositif de génération de rayon laser (23) pour l'enlèvement de résidus de revêtement (13) restant après l'enlèvement mécanique du revêtement fonctionnel (10) au moyen d'un rayonnement laser.

13. Dispositif de décapage (14) selon la revendication 12,
**caractérisé en ce que**
le dispositif de génération de rayon laser (23) comprend des moyens pour générer un rayon laser (24) avec une longueur d'onde dans le domaine infrarouge et/ou avec une longueur d'onde de 300 nm à 10,6 µm, de préférence de 0,5 µm à 1,5 µm,
et/ou d'une puissance laser de 1 W à 10 kW, de préférence de 10 W à 1 kW, de manière particulièrement préférée de 500 W à 1 kW.

14. Dispositif de décapage (14) selon la revendication 12 ou 13, **caractérisé en ce que**
a) le dispositif de génération de rayon laser (23) comprend des moyens pour générer un rayon laser (24) avec une section transversale de rayon ponctuelle ou une section transversale de rayon allongée, en particulier linéaire,
et/ou
b) le dispositif de génération de rayon laser (23) comprend des moyens, en particulier une optique, pour faire osciller le rayon laser (24), et/ou
c) le dispositif de meulage (25) et le dispositif de génération de rayon laser (23) sont couplés mécaniquement l'un à l'autre de telle sorte qu'ils peuvent être déplacés ensemble.

15. Procédé de fabrication d'une vitre (5a) pour un vitrage décalé (4), dans lequel la vitre (5a) est décapée au voisinage d'au moins l'une de ses arêtes de vitre (9b) et un revêtement coloré est ensuite appliqué sur la surface (9a) de vitre décapée,
**caractérisé en ce que**
le décapage est effectué selon l'une quelconque des revendications 1 à 11 et/ou en utilisant un dispositif de décapage (14) selon l'une des revendications 12 à 14.
